# EUROPEAN PATENT SPECIFICATION

(11) **EP 4 704 582 B1**
(45) Date of publication and mention of the grant of the patent: **18.11.2026**
(21) Application number: 24723545.0
(22) Date of filing: 02.05.2024
(51) Int. Cl.: A23C 7/04, A23C 9/15, A23J 1/20, A23J 3/10, A23J 3/32, A23L 33/19, A23L 33/00, A23C 19/05

(54) **DEPHOSPHORYLATION OF MILK PROTEIN CONCENTRATE, MILK PROTEIN ISOLATE OR MICELLAR CASEIN ISOLATE**
DEPHOSPHORYLIERUNG VON MILCHPROTEINKONZENTRAT, MILCHPROTEINISOLAT ODER MICELLAREM KASEIN ISOLAT
DEPHOSPHORYLATION DE CONCENTRÉ DE PROTÉINES DE LAIT, D'ISOLAT DE PROTÉINES DE LAIT OU D'ISOLAT DE CASÉINE MICELLAIRE

(30) Priority: 04.05.2023 WO PCT/EP2023/061832
(43) Date of publication of application: 11.03.2026
(73) Proprietor: N.V. Nutricia, 2712 HM Zoetermeer (NL)
(72) Inventor: RUIS, Hilde, 3584CT Utrecht (NL); YI, Liya, 3584CT Utrecht (NL)
(74) Representative: Nederlandsch Octrooibureau
(86) International application number: PCT/EP2024/062051
(87) International publication number: WO 2024/227851

(56) References cited:
- WO-A1-2015/156662
- US-A1- 2011 159 163
- US-B2- 9 497 983
- ULUKO HANKIE ET AL: "Functional Characteristics of Milk Protein Concentrates and Their Modification", CRITICAL REVIEWS IN FOOD SCIENCE AND NUTRITION, vol. 56, no. 7, 5 June 2015 (2015-06-05), USA, pages 1193 - 1208, XP093182336, ISSN: 1040-8398, DOI: 10.1080/10408398.2012.758625
- KOMMINENI ANIL ET AL: "Calcium-Reduced Micellar Casein Concentrate-Physicochemical Properties of Powders and Functional Properties of the Dispersions", FOODS, vol. 11, no. 10, 10 May 2022 (2022-05-10), pages 1377, XP093040074, DOI: 10.3390/foods11101377

## Description

### Field of the invention:

The present invention is in the field of a high-protein liquid enteral nutritional composition containing predominant amounts of micellar casein. More particularly, the present invention relates to dephosphorylation of milk protein concentrate (MPC), milk protein isolate (MPI) or micellar casein isolate (MCI). More in particular, the present invention addresses the problem of reducing phosphorus content of milk protein concentrate (MPE), milk protein isolate (MPI) or micellar casein isolate (MCI) and to a liquid shelf-stable and heat-sterilized enteral nutritional composition comprising 16 - 35 en% protein and 2.0 - 3.0 kcal/ml caloric content with a phosphorus content compliant with the requirements of foods for special medical purposes (FSMP).

### Background of the invention:

The present invention is in the field of high-protein liquid enteral nutritional compositions which are ready-to-use compositions with low intake volume, and enriched with all essential minerals, vitamins and trace elements. Use of high-protein nutritional supplement lowers the mortality and complication rates of malnourished patients, for which patients it is key to provide the required nutritional support and calories that they will otherwise not achieve from normal eating behaviour. Especially, using high-protein nutritional supplement provides the opportunity to improve the quality of life of malnourished patients and/or elderly.

There is a number of high-protein compositions on the market, such as there is the Compact protein range (Nutricia). Technically the struggle is to produce compositions with increased protein densities which are still shelf stable (i.e. can withstand the heating conditions of heat sterilization necessary to achieve shelf stability), without compromising mouthfeel and taste, and making use of high-quality proteins. Micellar casein is a preferred candidate in such high-protein compositions; together with whey protein it marks the standard for protein quality, but unlike whey protein or caseinates, micellar casein can withstand heat treatment even when used in high amounts. It has thus found its use in high-protein and high-caloric compositions.

However, high-protein liquid enteral nutritional compositions with profound micellar casein concentrations presently commercialized do not comply with the requirements of foods for special medical purposes (FSMP) because these exceed in phosphorus levels, i.e. above the level required by FSMP legislation. Ca and P are essential constituents of the micelles, and particularly the P concentrations play a part here. In the context of the present invention, with FSMP legislation it is the European Commission guideline on Food for Special Medical Purposes (FSMP) directive 1999/21/EC of 25 March 1999 which is intended.

A good example of such commercially available micellar casein products is MCI88 from Friesland Campina, with phosphorous levels of 1500-1700 mg/100 g powder (and with 85g protein/100 g) i.e. 17.6 - 20 mg phosphorous per g protein.

To a large extent, phosphorous originates from micellar casein. Casein provides about half of the P of milk (22% organic, 32% inorganic), there being about 1 g P per kg milk [source: Walstra, P., Wouters, J. T., & Geurts, T.J. (2006). Part 2: Processes, in Dairy science and technology. CRC press: Boc Raton, USA p. 207-272]. Casein contains two types of phosphorus, i.e. organic and inorganic phosphorous. P is part of colloidal calcium phosphate (inorganic-P) or covalently bound to caseins as phosphate groups (casein-P). Casein micelles typically contain both organic (46%) and inorganic phosphorus (64%). Phosphorous removal from such micellar casein products is a delicate matter, since together with the calcium the phosphorous is a key factor in stabilizing the micellar structure, while it is the micellar structure that is key to keep high-protein compositions stable. The core of a casein micelle is bound by calcium phosphate nanoclusters (CCP or casein phosphopeptide), and these CCP nanoclusters are important for maintaining the casein micelle structures heat-stable. Without CCP the micelles would fall apart. While phosphorous can be washed out, in order to maintain product stability, and simultaneously retain increased protein concentrations yet reduced viscosities, it is important to keep the integrity of the micellar casein essentially intact. In view of these compromises, high-protein liquid shelf-stable (i.e. heat-sterilized) enteral nutritional compositions commercially available typically contain total phosphorus levels up to 300 mg/100 mL, which is much higher than the maximal level of 192 mg/100 ml (or 30 - 80 mg/100kcal) required by FSMP. The major part of total phosphorus (about 250 mg/100 mL) is from the micellar casein source, and only a minor part of total phosphorus (about 50 mg/100 mL) originates from K₂PO₄. In order to meet the maximum set by FSMP requirements, at least 23% P should be reduced, and clearly such numbers can only be achieved when making use of MCI which exhibits reduced P levels.

WO2009/072885 discloses a problem associated with the use of micellar casein in the production of a high protein liquid enteral nutritional composition and further containing acids, in particular citric acid, is the formation of calcium-acid complexes, such as calcium citrate. At the same time it is recognized that a certain Ca-ion activity is beneficial to maintain a desired viscosity of the composition during processing of the composition, e.g. during pasteurisation and/or sterilisation. The viscosity of the composition during processing including heat-sterilization is controlled by using a mixture of micellar casein and caseinate. WO2013/129925 discloses a liquid enteral nutritional composition with a high energy content comprising 6 to 20 g / 100 ml protein, said protein comprising micellar casein and lactic acid. The purpose of this application to reduce viscosity of a protein-dense composition with increased levels of micellar casein by adding lactic acid rather than using citric acid.

US2011/159163 describes a process for increasing the protein concentration in milk and reducing the mineral content of the concentrated milk, using acidification and incubation at pH 5.9 - 6.3, and then followed by ultrafiltration at pH 6.4 - 7.0. In the above initial pH range, calcium and phosphorous are optimally solubilized. In order to avoid growth of pathogenic bacteria during incubation, the temperature is controlled either above 37 °C or below 25 °C. The pH is reduced with at least one acid selected from the group consisting of citric acid, malic acid, lactic acid, acetic acid, phosphoric acid, gluconic acid, glucono-delta-lactone and or hydrochloric acid. In the examples, pH adjustment was achieved using citric acid, ultrafiltration is carried out at 50°C. The protein retentate in these examples contained about 16-18 wt% protein, and 18 - 21 mg Ca and 13 - 13.5 mg P per g protein. While The process aims to concentrate milk, these conditions are not suited for achieving the higher protein concentrations that are associated with milk protein concentrates and isolates.

WO2015/156662 describes cross-linked micellar casein, using transglutaminase (TG) which helps to heat stabilized the milk even at high protein concentrations. The calcium and phosphorous content of cross-linked micellar casein can be reduced without destabilizing the micellar casein. However, TG treatment is an expensive treatment to be practiced on industrial scale.

US 6,558,717 discloses a method for isolating casein and calcium phosphate as separate products from a milk source, wherein carbon dioxide is brought into contact with the milk source under pressure to precipitate the casein. While it speaks of casein, the process is directed to produce caseinates, which are freed from calcium phosphates. At these conditions, there is micellar structure retained.

With an aim to produce bovine casein with reduced phosphorus for use in infant formula industry, McCarthy Noel et al. "The physical characteristics and emulsification properties of partially dephosphorylated bovine [beta]-casein" FOOD CHEMISTRY, vol. 138"(2) 2012, 1304-1311 describes partially dephosphorylated bovine beta-casein by rennet coagulation and cold solubilization of the resultant curd. Dephosphorylation was carried out using potato acid phosphatase at pH 6.5. After reaction, the free phosphate groups were removed using precipitation at pH 5 and centrifugation. The authors conclude that partially dephosphorylated beta-casein does not gel under acidic conditions, unlike non-dephosphorylated beta-casein which forms a continuous gel structure.

Choi Inseob et al. "Gluconic acid as a chelator to improve clarity of skim milk powder dispersions at pH 3.0" Food Chem., 344, 2020 describe the use of gluconic acid to improve clarity of 5 w/v% skim milk powder dispersions in acid environment. When using citric acid instead, the turbidity would be lower, but the dispersion remains translucent. Gluconic acid is the better chelator, a conclusion supported by the higher extent of dissolved CCP in serum phase.

While high amounts and concentrations of micellar casein are preferred to produce high-protein liquids, the disadvantage is that this yields an increase in phosphorous concentrations which compromises on FSMP requirements, and where it is challenging to remove the phosphorous without destabilizing the micelles. Therefore, there is a need in the art to reduce the phosphorus content of high-protein liquid enteral nutritional composition which are high in micellar casein, ultimately to comply with the FSMP requirements. For energy-dense high-protein products comprising mainly micellar casein as protein source (e.g. at least 80 wt% of the protein is micellar casein) the phosphorous content should be below 15mg, preferably below 14 mg even more preferably below 13.3 mg phosphorous per gram protein. In essence, the lower the better without compromising the micellar casein structure; it is only with those restrictions that high-protein compositions with protein levels beyond 12 g/100 ml up to 14.4 g/100 ml compliant with FSMP requirements on P could be produced (using Nitrogen factor 6.25).

### Summary of the invention:

The present invention provides a process to reduce the phosphorus content of milk protein concentrate, milk protein isolate (MPI), or micellar casein isolate (MCI), and which dephosphorylated product makes a very suitable ingredient to produce a high-protein liquid shelf-stable (heat-sterilized) enteral nutritional composition that complies with the FSMP requirements, particularly with regard to phosphorous content (a maximum of 192 mg/100 ml or 30 - 80 mg/100kcal according to FSMP directive 1999/21/EC).

Phosphorous levels in skim milk, UF milk and MCI as commercially marketed are about 1700 mg P per 100 g powder, or 20 mg P per g protein, which is too high to implement higher amounts of these proteins in high-protein products. As shown in the example, acidification to pH 6.0, cooling to 4 °C and using 70 mEq. gluconate, the dephosphorylation method of the invention makes it possible to reduce to 75 mg P per 100 g powder or 12.3 mg P per g protein, which was a reduction of 38.3%. The process of the invention works particularly well for the ferconcentrated protein applications MPC, MPI and MCI.

The gluconate or maleate chelators manage to bind to the calcium and make it possible to wash out phosphorous while stabilising a micellar casein structure. The effects of the selective acidification and specific chelators is demonstrated in the examples, and it turned out that the ability to retain the heat-stable micellar structure yet reduce P was limited to gluconate and maleate, with the best results obtained with gluconate. Care is taken to control pH in order to minimize or even avoid acid gel formation of the micelles. As said, particularly good heat-stabilizing effects have been obtained with gluconate and maleate, particularly gluconate. Citrate is a common calcium chelator in the field, but as it appeared it was not able to keep the micelles heat-stable, and the amount of phosphorous reduction was also limited. Acetate showed disappointing results presumably due to the low affinity for CCP, no phosphorous reduction was observed. Similar results are expected with lactate, which - compared to acetate - has even worse calcium chelating affinity. Wishing not to be tied down to any theory, the inventors believe that the difference between chelators and the success behind maleate and particularly gluconate rests in the way these influence the activity of calcium in solution, and how these impact to shift the casein-mineral equilibria. The action of chelators leads to a decrease of free calcium ions, dissolution of CCP from caseins, release of specific caseins from micelle, and which release in turn has an impact to heat stability. Based on the results provided, citrate is believed to lead to CPP completely dissolve from the caseins, and, as explained here above, without CCP these caseins fall apart. On the other hand, lactate and acetate show no affinity for CCP.

Therefore, in a first aspect, the present invention provides a process for dephosphorylation of MPC and MPI, or MCI comprising;
(i) acidification of MPC, MPI or MCI not lower than pH 6.0,
(ii) cooling the MPC, MPI or MCI to the temperature between 0 °C and 15 °C,
(iii) adding gluconate and/or maleate to the cooled MPC, MPI or MCI, and,
(iv) washing the MPC, MPI or MCI (of step (iii)) to remove phosphorus, wherein washing is carried out using microfiltration and/or diafiltration, thus dephosphorylating the MFC, MPI or MCI, wherein the maleate chelator is not hydrogen maleate salt.

With 'dephosphorylation' it is preferably understood that the total phosphorous content of the starting material (i.e. skim milk, UF milk or MCI) is reduced with at least 20%, preferably 20-40%, more preferably 30 - 40 % (compared to the total phosphorous content of the starting material). The amount of total phosphorus in commercially available MCI is about 1500 - 1700 mg per 100 g, and with about 85/100 g protein, the amount of P in such MCI powders is typically about 18 - 20 mg per g protein. While the amount of micellar casein in the other starting materials (skim milk, UF milk) may be lower than calculated here above for MCI, since the sole P source in these other milk sources is the micellar casein, the same 18 - 20 mg per g protein is also typical for those starting materials.

In a second aspect, the invention pertains to dephosphorylated **"** milk protein concentrate (MPC), milk protein isolate (MPI) or micellar casein isolate (MCI) with gluconate and/or maleate, as defined in appended claim 3.

While there is no lower limit, in practice the amount of P is preferably above 10 mg phosphorous per gram protein. The dephosphorylated milk protein concentrate (MPC), milk protein isolate (MPI) or micellar casein isolate (MCI) with gluconate and/or maleate is obtainable and preferably obtained by the process according to the invention and as described hereabove, and detailed throughout the application.

Further disclosed is the use of dephosphorylated milk protein concentrate (MPC), milk protein isolate (MPI) or MCI for manufacturing a liquid, heat-sterilized, high-protein enteral nutritional composition comprising 2.0 - 3.0 kcal/ml wherein 16 - 35 en% is provided by protein, and wherein the protein comprises at least 70 wt% micellar casein, based on total protein. In a further aspect, the present invention provides a liquid heat-sterilized enteral nutritional composition comprising 2.0 - 3.0 kcal/ml as defined in appended claim 4.

The composition further comprises gluconate and/or maleate. The presence of detectable amounts of gluconate and/or maleate in the composition is indicative of the use of dephosphorylated milk protein concentrate (MPC), milk protein isolate (MPI) or MCI, necessary to arrive at reduced amounts of phosphorous in compliance with FSMP.

Within the above caloric constrictions of 2.0 - 3.0 kcal/ml and within the range of protein caloric contributions of 16 - 35 en%, it would allow for 8.0 - 26 g/100 ml protein provided by the composition. However, the term 'high-protein' preferably means that the combination of caloric content and protein caloric content are selected such that there is 10 - 18 g/100 ml protein, preferably 12 - 18 g/100 ml protein in the composition. The problems with compliance with FSMP plays particularly a part for these higher protein concentrations.

### List of Figures:

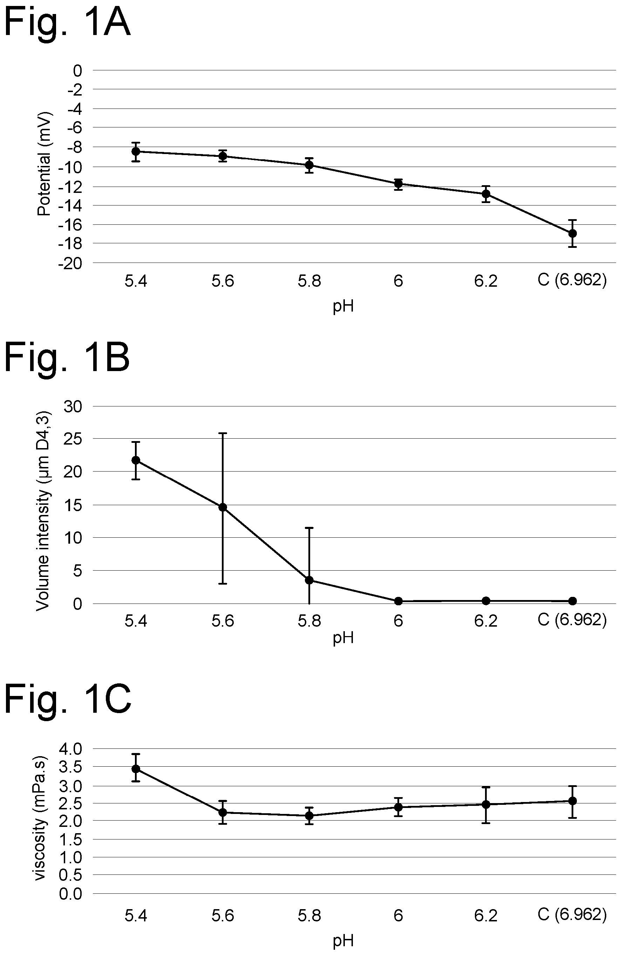

Figure 1: Effect of acidification on (a) stability (zeta-potential), (b) volume intensity (particle size) and (c) viscosity.

In a preferred form, the gluconate and/or maleate chelator used in the process is sodium gluconate, potassium gluconate, disodium maleate and/or dipotassium maleate, preferably sodium gluconate and/or potassium gluconate.

Preferably, the total amount of phosphorous in the liquid heat-sterilized enteral nutritional composition is 30 - 72 mg/kcal, namely at least 10% below the FSMP maximum, preferably 30 - 64 mg/kcal, namely at least 20% below the FSMP maximum.

Preferably, the protein provides 16 % to 32 % of the total energy content of the liquid heat-sterilized enteral nutritional composition, more preferably 18 % to 30 en%, even more preferably 20 % to 28 en%, preferably in combination with a caloric content of 2.2 - 2.6 kcal/ml.

Preferably, the amount of protein in the liquid heat-sterilized enteral nutritional composition is between 12 and 18 g/100 ml.

Preferably, the weight ratio of micellar casein to caseinate ranges from 90:10 to 60:40 in the liquid heat-sterilized enteral nutritional composition.

Preferably, the amount of whey protein in the liquid heat-sterilized enteral nutritional composition is less than 10 wt% based on total protein.

Preferably, the liquid heat-sterilized enteral nutritional composition comprises at least 2 mineral levels, more preferably at least 3, even more preferably at least 4, most preferably all mineral levels for Na, K, Cl, Ca and Mg within the ranges (mg/100 kcal) according to the table below:

| | FSMP (min-max per 100 kcal) |
|---|---|
| Na (mg) | 30-175 |
| K (mg) | 80-295 |
| Cl (mg) | 30-175 |
| Ca (mg) | 35-175 |
| Mg (mg) | 7.5-25 |

### Detailed description of the invention:

The present invention provides a process for dephosphorylation of milk protein concentrate (MPC), milk protein isolate (MPI) or micellar casein isolate (MCI). As a first step, skim milk, UF or MCI is acidified (i.e. pH < 7), but not lower than 6.0. Below pH 6.0, acid formation of MCI was observed, and the desired micellar structure gets lost. In the example, this acid gel formation was observed at pH 5.8. Reference is for instance made to Figure 1B.

The starting material is MPC, MPI, or MCI.

The protein concentration is preferably at least 60 wt%. Within this subgroup, the preferred starting material is MCI, given its reduced whey protein concentration. All of the above are commercially available.

After acidification step, the acidified mixture is cooled at a temperature between 0 °C and 15°C, preferably between 2 and 12 °C, more preferably between 2 and 9 °C. In the example it is shown that P reduction was improved when cooling from 20 °C to lower temperatures, preferably with the aforementioned ranges. Commercially extensive cooling on industrial scale is not preferred, and the skilled person can optimize the balance between the P reduction and the need for excessive amounts of resources needed for cooling to achieve suitably reduced P levels.

Unless explicitly mentioned otherwise, the terms 'phosphorous' and 'total phosphorous' are used interchangeably throughout the application, and are understood to be the sum of both organic and inorganic phosphorous.

Unless expressly mentioned otherwise, throughout the application the term 'FSMP' refers to Food for Special Medical Purposes (FSMP) directive 1999/21/EC of 25 March 1999.

Total phosphorous concentrations in the context of the invention can be measured using any conventional method in the art, such as inductively coupled plasma optical emission spectroscopy (ICP-OES) as was used in the examples.

Lastly, gluconate and/or maleate, preferably at least gluconate, is added to the cooled mixture and, it is washed to remove phosphorus. The amount of gluconate and/or maleate is preferably added in an amount of 0.05 - 0.5 g per g micellar casein, preferably 0.1 - 0.4 g per g micellar casein. It is preferred that gluconate is added in an amount of 0.05 - 0.5 g per g micellar casein, preferably 0.1 - 0.4 g per g micellar casein.

Casein micelles are present in milk as polydisperse spherical complexes with an average diameter of 200 nm. Casein micelles are heterogeneous, hydrated, dynamic structures with a loose packing and a high porosity. They consist of different types, namely αₛ₁-, αₛ₂-, β-, and κ-casein, and colloidal calcium phosphate (CCP). CCP is essential for maintaining the micellar structure: casein micelles dissociate when CCP is chelated or solubilized. Micelle dissociation can be induced by high-pressure treatment, pH decrease, or calcium chelators. Casein micelles contain two types of phosphorus, which are organic and inorganic phosphorus. The phosphate which is esterified to the casein molecule via a hydroxyl group of serine amino acid is generally called organic phosphate at around 23% in milk, and the phosphate which is associated with the casein molecules in the form of calcium phosphate nanoclusters called as inorganic phosphate at around 32% in milk. There are also some phosphorus molecules present in the serum phase, such as inorganic dissolved phosphate and organic phosphate in the form of esters.

In accordance with the skilled person's common general knowledge, the term 'micellar casein' (MC) is not enzymatically (transglutaminase (TG)) crosslinked micellar casein. There is no step of enzymatically or actively covalently crosslinking micelles to prevent from dissociation. Hence, in the process of the invention there is no step of enzymatically and (actively) covalently crosslinking the casein micelles, and destabilization and dissociation of the micelles has to be avoided differently. Also, in the context of the invention, and associated with the exclusion of any enzymatic crosslinking step in the manufacture, MC in the compositions of the invention is not transglutaminase-crosslinked micellar casein (or worded differently, the invention is directed or limited to not TG-crosslinked micellar casein). Throughout the application, the MPC, MPI or MCI are not enzymatically (or covalently) crosslinked MPC, MPI or MCI.

The present invention aims to reduce the phosphorus content of MPC, MPI or MCI and a high protein liquid shelf-stable and heat-sterilized enteral nutritional composition by removal of organic phosphate esterified on the serine amino acids and inorganic phosphate present in the calcium phosphate nanoclusters. However, reducing phosphorus content is challenging because casein micelles can be dissociate and destroy the micellar structure. The inventors have found a process to reduce the phosphorus content of milk protein concentrate (MPC), milk protein isolate (MPI) or micellar casein isolate (MCI) while retaining an essentially micellar structure; although the micelles may be distinguishable from micellar casein having normal phosphorous levels, and in terms of a decrease in size due to dephosphorylation and other processing steps. However, in spite of the above, it has surprisingly been shown that when using the method according to the invention the structure is sufficiently stable enough to endure heat treatments necessary for the increased shelf life needed in the products according to the invention.

It was found that maleate and gluconate play a key role in chelating to and extracting the phosphorous from the micelles without rigorously affecting the micellar structure. Calcium chelators are not new in the field, and typically the skilled person resorts to citrate or even lactate, both being abundantly available in the field of high-protein concentrations. Chelators have an effect on disintegration of casein micelles, reduction of κ-casein negative charges and interaction of free Ca²⁺ ion with κ-casein. The benefits of the invention were found specific to the named chelators, while citrate did not result in the desired reduction of P levels yet retaining a micellar casein structure.

While good results are obtained with dipotassium and disodium maleate, table 1 shows that the best result is obtained with a gluconate salt. Commercially more common chelators are citrate and acetate, but none of these were found suited to achieve the effects found for potassium or sodium gluconate, and dipotassium and disodium maleate. Lactate does not interact with CCP in the casein micelle, and therefore does not serve a purpose here (source: de Kort, E. J. P. (2012). Influence of calcium chelators on concentrated micellar casein solutions : from micellar structure to viscosity and heat stability. [internal PhD, WU, Wageningen University]. Page 129). On the other hand, the gluconate and maleate salts do not only enhance the depletion of phosphorus from the casein micelles but also help to maintain the intrinsic structure of the casein micelles. Furthermore, unlike the other chelators mentioned, the addition of the gluconate or maleate salts do not affect the heat stability. When using maleate, disodium maleate is preferred. In embodiments which are directed to the use of maleate as a chelator in the context of the invention, hydrogen maleate salt such as potassium hydrogen maleate and sodium hydrogen maleate are disclaimed.

Gluconate salts are the most preferred chelators, preferably sodium or potassium gluconate.

The acidification step is done in order to increase the solubility of phosphorus in casein micelles. It is an important step because adjusting the pH has effect on the particle size, viscosity and stability of the casein micelles. Figure 1 shows that at pH between 6.7 and 6.0 significant reduction of negative charge is observed, and viscosity and particle size remains the same. At pH between 6.0 and 5.6, no significant reduction of negative charge is observed but significant particle size increase is observed. This is attributed to gel formation. At pH 5.4, significant particle size and viscosity increase is observed due to complete collapse of κ-casein. Therefore, during the acidification step, the pH is preferably between 6.0 and 7.0, more preferably between 6.0 and 6.7, even more preferably between 6.1 and 6.5.

Washing to remove phosphorous is carried out by microfiltration and/or diafiltration, wherein the dephosphorylated product is the retentate.

Further disclosed is dephosphorylated milk protein concentrate (MPC) and milk protein isolate (MPI), or micellar casein isolate (MCI) with gluconate and/or maleate comprises 20 % to 40 % less total phosphorus compared to the untreated corresponding counterpart which can further be characterized by a lack of gluconate and/or maleate, and a phosphorous concentration (i.e. the sum of organic and inorganic phosphorous) which is less than 192 mg/100 ml, in accordance with FSMP regulations.

Preferably the total amount of phosphorous in the high-protein composition is at least 10% below the FSMP maximum (i.e. below 72 mg/100 kcal), preferably at least 20% below the FSMP maximum (i.e. below 64 mg/100 kcal). This is summarized in table 1 below. In accordance, most preferably a reduction between 30 and 40% of the original phosphorous concentration is desired (Table 1). While a part of that reduction can be achieved by reducing the amount of phosphates typically used in such compositions, preferably by refraining from phosphate salt(s) and phosphoric acid, the desired reduction in total phosphorous levels compared to FSMP presented in table 1 can be achieved according to the invention by reducing the amount of phosphorous in a typical micellar casein-providing source with 300 mg P/100ml by preferably at least 23%, more preferably at least 31%, most preferably at least 38% compared to the original 300 mg P/100ml concentration in the starting material. With those reductions in the P content of the micellar casein which can be achieved using the method of the invention, total phosphorous levels can be reduced below the FSMP maximum limit, and preferably to less than 90% or even less than 80% of the FSMP-set maximum total phosphorous content, respectively.

**Table 1: Preferred maximum phosphorus content of high-protein liquid, heat-sterilized enteral nutritional compositions in comparison to commercial products, and FSMP**

| | Current (mg/ 100 mL) | FSMP (mg/ 100 mL) | preferred (mg/ 100 mL) | More preferred (mg/ 100 mL) |
|---|---|---|---|---|
| Total Phosphorus (P) | 300 | <192 | <172 | <153 |
| Reduction in P compared to commercial products | | ≥23.2% | ≥31.2% | ≥38.4% |
| Reduction in P compared to max in FSMP | | | ≥10% | ≥20% |

Further disclosed is a high-protein liquid heat-sterilized enteral nutritional composition with reduced phosphorus content which complies with the requirements of FSMP. In a preferred embodiment, the composition comprises phosphorus in an amount between 32 - 78 mg/100kcal, preferably 36 - 76 mg/100kcal, even more preferably 38 - 74 mg/100kcal, most preferably 40 - 70 mg/100kcal.

The term "liquid enteral nutritional composition" refers to an aqueous composition comprising protein, fat and carbohydrates which is to be administered by mouth or by other means, generally by tube feeding, to the stomach or intestines of a patient. Oral administration is preferred. The viscosity is preferably below 500 cP, more preferably below 400 cP, most preferably below 300 cP, as measured at a shear rate of 100 s-1 at 20 °C using a rotational viscosity meter using a cone/plate geometry. The high protein liquid heat-sterilized enteral nutritional composition according to the invention is designed to either supplement a person's diet or to provide complete nutritional support. Hence, the composition according to the invention further comprises fat and carbohydrates and preferably a source of vitamins and minerals and/or a source of prebiotics. Preferably, the composition according to the invention is a nutritionally complete composition.

The high-protein composition of the invention is a packaged product ready for transport and marketing. In a preferred embodiment, it is a ready-to-use composition. It is heat-sterilized, and preferably shelf-stable.

The term "heat-sterilized" refers to foods that are treated by heat to destroy foodborne microorganisms and are safely stored at room temperature on the shelf, typically for a period of at least 10 months. The composition is preferably a shelf-stable composition. The term "shelf-stable" herein refers to storage stability. A nutritional composition is shelf-stable if it is storage stable at ambient temperature with respect to microbiological spoilage and physical defects like creaming, gelation, precipitation, etc., for a certain amount of time. Preferably, the nutritional composition has a shelf-stability of at least one month, more preferably at least 3 months, even more preferably at least 6 months and most preferably at least 12 months after packaging, when stored in a sealed packaging at ambient temperature (20 °C). The invention is not limited to specific sterilization conditions, and in fact the invention renders it possible to subject the high-protein to heat sterilization conditions which are common practice in the field, and which belong to the skilled person's common general knowledge. However, in the field a significant part of the problem of achieving high protein compositions rests in the need for such heat treatment in order to reduce the microbial load to levels that the product can be shelved for extended periods.

The total protein preferably provides 16 % to 32 % of the total energy content of the composition, more preferably 18 % to 30 en%, even more preferably 20 % to 28 en%. In a preferred embodiment, each of these numbers are in combination with a caloric content of 2.2 - 2.6 kcal/ml. Hence, derived therefrom, the amount of protein in the composition is preferably 8.8 - 20.8 g/100 ml, more preferably 9.9 - 19.5 g/100 ml, most preferably 11 - 18.2 g/100 ml. However, it is even more preferred that the amount of protein is between 12 and 18 g/100 ml. It is at these higher protein concentrations that the phosphorylated protein i.e. reduced protein concentrations per gram protein, provides an advantage over commercially available high-protein compositions (which cannot meet the FSMP guidelines when using profound amounts of MC).

The liquid high-protein compositions according to the invention are characterized by high amounts of micellar casein, preferably 70 - 95 wt%, more preferably 75 - 95 wt%, most preferably 80 - 95 wt% of all proteinaceous matter. The term 'micellar casein' refers to the structure of casein proteins in milk which is commonly known in the art and comprises of the different casein proteins αS1, αS2, β, κ casein. As described above, the size of the micelles can vary. In unprocessed milk the micelles can vary between about 100 and 500 nm, but after dephosphorylation using the method of the invention, the size of the micelles can even vary wider, yet the micellar structure is essentially retained.

Preferably, the compositions according to the invention further comprises at least 2 mineral levels according to the ranges according to the table below, more preferably at least 3, even more preferably at least 4, most preferably all mineral levels for Na, K, Cl, Ca and Mg according to the FSMP recommended levels requirements summarized in according to the table below (which is an extract of table 2 of the above EU Directive):

| | FSMP (min-max per 100 kcal) |
|---|---|
| Na (mg) | 30-175 |
| K (mg) | 80-295 |
| Cl (mg) | 30-175 |
| Ca (mg) | 35-175 |
| Mg (mg) | 7.5-25 |

According to one embodiment, the composition comprises 30 - 175 mg sodium per 100 kcal of the composition. In a preferred embodiment, the composition preferably comprises sodium in an amount between 30 - 140 mg/100kcal, more preferably 32 - 100 mg/100kcal, even more preferably 34 - 80 mg/100kcal. Expressed differently, the composition comprises from 70 - 250 mg sodium per 100ml of the liquid composition, preferably 80 - 230 mg sodium per 100ml of the liquid composition.

The composition preferably comprises potassium. In a preferred embodiment, the composition comprises 80 - 295 mg potassium per 100 kcal of the composition. Particularly, the composition comprises potassium in an amount between 85 - 250 mg/100kcal, more preferably 90 - 200 mg/100kcal, even more preferably 95 - 150 mg/100kcal. Expressed differently, the composition preferably comprises from 180 - 400 mg potassium per 100ml of the liquid composition, more preferably 200 - 380 mg potassium per 100ml of the liquid composition. In view of the aim to reduce P levels, it is preferred that potassium is not provided in the form of a potassium phosphate salt. A suitable form could be potassium gluconate and/or dipotassium maleate.

The process of dephosphorylation does not affect nor is it affected by the presence of calcium in the composition. Typically, calcium concentrations in the skim milk, **UF** milk or MCI are about 30 mg per gram protein. It is preferred to maintain Ca levels within FSMP standards, i.e. between 35 and 175 mg Ca per 100 kcal.

The composition preferably comprises chlorine (CI) in an amount between 30 - 175 mg/100kcal, preferably 35 - 150 mg/100kcal, even more preferably 40 - 140 mg/100kcal. Expressed differently, the composition comprises from 100 - 380 mg chlorine per 100ml of the liquid composition, preferably 110 - 350 mg chlorine per 100ml of the liquid composition.

According to one embodiment of the present invention, a liquid shelf-stable/heat-sterilized enteral nutritional composition comprising 12 - 16 g/100 ml protein and 2.0 - 3.0 kcal/ml caloric content, preferably 2.2 - 2.6 kcal/ml, wherein the protein comprises micellar casein (MC), whey protein (WP) and optionally caseinate (CAS), wherein there is at least 70wt% MC and less than 15 wt% WP, based on total protein content, the composition preferably comprising 7 - 12 g/100 ml fat and 18 - 30 g/100 ml digestible carbohydrates, and wherein the composition has a total amount of phosphorous less than 192 mg/100 ml and/or 30 - 80 mg/100kcal, preferably at least 30 - 80 mg/100kcal, more preferably less than 192 mg/100 ml and 30 - 80 mg/100kcal.

Given its potential negative impact on viscosity in heat-sterilized compositions, when WP is included in the composition in the invention, this is preferably controlled to reduced amounts i.e. less than 15 wt%, most preferably less than 10 wt%, based on total protein. WP can also be provided in intact and/or hydrolyzed form. The above is the sum of both hydrolyzed and intact WP. A measure for the extent of hydrolysation of the whey protein is the "degree of hydrolysation" (DH). The DH is defined as the percentage of the total number of peptide bonds in a protein that has been cleaved during hydrolysis. The DH of a protein may e.g. be determined by the trinitrobenzenesulphonic acid (TNBS) procedure, as known in the art ( Adler-Nissen, J. Agr. Food Chem. 1979, 27(6), 1256 ). When whey protein is subjected to a hydrolysis process, the source of whey protein may already comprise a certain (small) amount of peptide fractions, before being subjected to the hydrolysis process. The values for the degree of hydrolysation as described herein are corrected for this presence of peptide-fractions in the whey protein source, in other words, the values for the DH are corrected for the natural DH of whey protein. Herein, the DH thus relates to the additional hydrolysation that was obtained via the intentional hydrolysis process. When the composition comprises hydrolysed whey protein, it preferably has a degree of hydrolysation of 1-25%, preferably in the range of 5 to 25%. As described above, the degree of hydrolysation as used herein is corrected for the natural degree of hydrolysation of the whey protein source, i.e. the whey protein that was used for the preparation of the hydrolysed whey protein.

Related with the selected micellar casein source and the desired reduced amount of whey protein, the composition may also comprise limited amounts of caseinate. Most MCI sources have WP contents below 10%, preferably below 5 wt%, based on total protein. A combination of micellar casein and caseinate is particularly preferred when the micellar casein is provided by a source which comprises more than 10 wt% whey protein, such as MPC or MPI (with a weight ratio of micellar casein to whey protein of 80:20). The caseinates may be added to the micellar casein in order to control (reduce) the amount of whey protein levels in the protein fraction as described above. Hence, in one embodiment of the present invention, the weight ratio of micellar casein to caseinate ranges from 90:10 to 75:25. Na-caseinate, Mg-caseinate, K-caseinate, Ca-caseinate or any mixture thereof or combinations thereof such as Na/K-caseinate and Na/Mg caseinate are used as the source of caseinate. Preferably, Ca-caseinate, or a caseinate comprising Ca is not used, as the micellar casein already contains a sufficient amount of calcium. Also, Na/K caseinates provide better taste.

The composition preferably comprises:
- 16-35 en% protein,
- 30-55 en% digestible carbohydrates, and
- 30-55 en% fat,
wherein the combination of caloric content and en% protein is preferably selected such that the amount of protein is between 10 and 18 g/100 ml, and most preferably between 12 and 18 g/100ml. As used throughout the application, "en%" refers to % of total energy of the composition. It thus refers to energy percentage representing the relative amount that a constituent contributes to the total caloric value of the composition. The amounts of energy provided by proteins, fats and carbohydrates can be estimated e.g. using Atwater factor wherein: 4 kcal per gram (kcal/g) (17 kJ/g) for protein (and amino acids), 4 kcal/g for digestible carbohydrates and 9 kcal/g (37 kJ/g) for fat.

The liquid composition preferably comprises 7 - 12 g/100 ml fat and 18 - 30 g/100 ml digestible carbohydrates.

The liquid nutritional composition according to the invention preferably comprises fat, said fat providing between 30 to 55 % of the total energy content of the composition. Preferably, the compositions according to the invention comprise vegetable fats, preferably rapeseed oil, sunflower oil, corn oil, soybean oil, canola oil, or combinations thereof.

The fat may include medium chain triglycerides (MCT, mainly 8 to 10 carbon atoms long), long chain triglycerides (LCT) or any combination of the two types, according to the desired benefits. Preferably, the fat comprises 30 to 60 wt% of animal or algal fat, 40 to 70 wt% of vegetable fat and optionally 0 to 20 wt% of MCTs based on total fat of the composition. If present, the animal fat preferably comprises a low amount of milk fat, i.e. lower than 6 wt%, especially lower than 3 wt%. In particular, a mixture of corn oil, egg oil, and/or canola oil and specific amounts of marine oil are used. Egg oils, fish oils and algal oils are a preferred source of non-vegetable fats.

Especially for compositions that are to be consumed orally, in order to prevent formation of off-flavours and to decrease a fishy after-taste, it is recommended to select ingredients that are relatively low in docosahexanoic acid (DHA), i.e. less than 6 wt%, preferably less than 4 wt% of the fat. Marine oils containing DHA are preferably present in the composition according to the invention in an amount lower than 25 wt%, preferably lower than 15 wt% of the fat. On the other hand, inclusion of eicosapentanoic acid (EPA) is highly desirable for obtaining the maximum health effect. The amount of EPA ranges preferably between 4 wt% and 15 wt%, more preferably between 8 wt% and 13 wt% of the fat. The weight ratio EPA:DHA is advantageously at least 6:4, for example between 2:1 1 and 10:1.

Also, the liquid nutritional composition according to the invention may beneficially comprise an emulsifier. Commonly known emulsifiers may be used, such as lecithin, and generally the emulsifier contributes to the energy content of the fat in said composition.

The liquid nutritional composition according to the invention comprises digestible carbohydrates, said carbohydrates providing between 30 to 55 % of the total energy content of the composition. Suitable digestible carbohydrates are glucose, fructose, sucrose, lactose, trehalose, palatinose, corn syrup, malt, maltose, isomaltose, partially hydrolysed corn starch, maltodextrins, glucose oligo- and poly-saccharides.

Preferably the digestible carbohydrates include trehalose or isomaltulose. Trehalose/isomaltulose can reduce sweetness compared to sucrose, because the relative sweetness is as sucrose (100), trehalose (45), isomaltulose (40-50). In addition, due to similar chemical structure, the viscosity as measured is similar whichever of the three is used for a digestible carbohydrate. However, panelists favored trehalose over sucrose in the high-protein composition of the invention, for it was perceived less viscous. Hence, trehalose is a preferred choice of carbohydrate, as it gives rise to a low (perceived) viscosity, no undesired Maillard reactions and it has a sweetness about half of that of sucrose. In one embodiment of the present invention, the digestible carbohydrates include trehalose in an amount of 20 to 60 wt% of the digestible carbohydrates, more preferably in an amount of 20 % to 45 wt%, even more preferably in an amount of 25 to 45 wt% of the digestible carbohydrates; in a most preferred embodiment, the remainder is provided by maltodextrins with DE 16-20.

In a further aspect, the present invention further refers to the use of the compositions described herein for preventing or treating malnutrition in a person in need thereof, preferably a malnourished person and/or elderly preferably at least 50 years of age. Additionally, the invention also concerns a (non-therapeutic) method of providing nutrition to a person in need thereof, preferably a malnourished person and/or elderly preferably at least 50 years of age, the method comprising enterally, preferably orally, administering the liquid nutritional composition according to the invention.

It should be understood that various changes and modifications to the presently preferred embodiments described herein will be apparent to those skilled in the art.

### Examples

### Example 1 - MCI was tested using different types of calcium chelators (Table 2). pH and T were also varied.

### MCI

The micellar casein isolate solution was prepared in demineralized water at 60°C, 105 grams (7% (w/v)) of powdered MCI-88 from Friesland Campina was dissolved. To dissolve the powdered MCI, the solution was placed in a pre-heated (60°C) water bath (Julabo GmbH, Boven-Leeuwen, The Netherlands) where the solution was stirred at 1000 rpm using an overhead stirrer (IKA, Staufen, Germany). When a complete powder dispersion was observed, the dispersion was left in the water bath of 60°C for 1 hour while continuously stirred at 200 rpm. Next, the dispersion was homogenized with the ultra-turrax (IKA, Oude Vijvers, the Netherlands) for 5 minutes at 25.000 rpm. Then, the protein dispersion was further homogenized using a two-staged GEA Pony NS2006L pilot-scale homogenizer (Parma, Italy) with a first valve pressure of 300 bar and a second valve pressure of 50 bar. To confirm a complete dissolution of the particles in the solution, the particle size distribution was measured with the Mastersizer 3000 (Malvern Analytical Ltd., Malvern, United Kingdom). In addition, the dry matter was measured by CEM moisture analyser (Mettler Toledo, Tiel, the Netherlands). The sample was stored overnight in de fridge at 4°C to equilibrate.

The MCI solution was acidified to pH 6.0 (±0.05), and chelator with a concentration of 70 mEq K/L was added. The chelator was selected from K-gluconate, disodium maleate and K-citrate.

**Table 2. Overview of the concentration in mmol/L and mEq K/L for the different calcium chelators**

| **Type calcium chelator** | **Charge** | **70 mEq K/L *** | **100 mEq K/L *** | |
|---|---|---|---|---|
| Potassium gluconate | -1 | 70 | 100 | mM |
| Potassium citrate | -3 | 23.33 | 33.33 | mM |
| Disodium maleate | -2 | 35 | 50 | mM |

| | | | | |
|---|---|---|---|---|
| * K = functional groups | | | | |

The samples were stored overnight in the fridge at 4°C to equilibrate. The next day, pH was readjusted to 6. Then, demineralized water was added until a 5% (w/v) protein concentration was reached according to the dry matter measurements. Next the samples were stored in the fridge at 5°C for 1 hour to equilibrate. Similar methods were applied for all other chelator concentrations.

The same experiments were also carried out without any chelator, studying the effect of pH and the effect of cooling temperature (working at ambient temperature instead). The effect of pH is plotted in Figure 1. The measurements at 20°C are given in table 3.

Microfiltration and/or diafiltration was performed and the retentate was obtained.

The amount of phosphorous in starting material and in the retentate was measured using Inductively Coupled Plasma Optical Emission spectroscopy (ICP-OES). In the starting material, there was 1500 - 1700 mg/100 g MCI88, and with 85 g protein/100 g, the amount of P in the starting material was 17.6 - 20 mg.

To measure the particle size of the proteins, the particle size distribution was measured using the Mastersizer 3000 (Malvern Analytical Ltd., Malvern, United Kingdom). The data was processed using the Mastersizer 3000 Software v3.80 (Malvern Analytica Ltd., Malvern, United Kingdom). All measurements were performed three times.

The Zeta-potential was measured with the Zetasizer Nano Z (Malvern Analytical Ltd., Malvern, United Kingdom) equipped with 4 mW He-Ne laser. Disposable folded capillary Zetasizer Nano cells of 1.5 mL (DTS1060, Malvern Instruments, Worcestershire, UK) were used for the measurements. The samples were 100 times diluted in the supernatant of the ultracentrifugated samples. Analyses were performed at ambient cell temperature and a voltage of 100 V. Data were processed with Zetasizer software (Malvern Analytical Ltd., Malvern, United Kingdom).

Viscosity was measured at a shear rate of 100 s-1 at 20°C using a rotational viscosity meter using a cone/plate geometry.

### Composition A

To produce a liquid heat-sterilized enteral nutritional composition, dephosphorylated MCI-88 (retentate) (prepared using 70 mEq potassium gluconate with pH 6.0 and 4 °C cooling) was used as starting material. The retentate was stirred using a magnetic stirrer and pre-warmed to 55°C with a hotplate stirrer (imLab IKA plate, Oude Vijvers, The Netherlands). First, sodium caseinate and sugar, both in powder form, were mixed before they were added to the retentate. When dissolved, the maltodextrin was added. Before adding citrate and calcium chloride, the minerals were pre-mixed in water in a 1:10 ratio. Similarly, magnesium and citric acid were premixed and subsequently added to the mixture while stirring. The left-over minerals were added one at the time directly to the mixture until dissolved. The oil mixture of canola oil and lecithin was first blended and preheated till 65°C. Then, the oil mixture was added and homogenised using the ultra-turrax (IKA, Oude Vijvers, the Netherlands) for 5 minutes at 25,000 rpm to prevent phase separation. Each sample (retentate and total product) was transferred to pressure-resistant DURAN culture tubes to prevent the product from boiling.

Next, the samples were put into a temperature-controlled oil bath (Julabo GmbH, Boven-Leeuwen, the Netherlands) and heated at 127°C. During the heat treatment, the samples were turned upside down. After 5, 10 and 20 minutes of heating the heat coagulation time (HCT) was measured via visual inspection. After 20 minutes the samples were cooled with icepacks to 5 °C.

### Results

The results in terms of P levels for the MCI compositions and composition A are given in table 3 below:

**Table 3: Phosphorus reduction by using different calcium chelators**

| **Sample** | **pH** | **T (°C)** | **Calcium Chelator** | **P reduction (%)** |
|---|---|---|---|---|
| MCI | 6.0 | 4 | 70 meq K-gluconate | 38 |
| MCI | 6.0 | 4 | 70 meq Disodium maleate | 25.9 |
| MCI | 6.0 | 4 | 70 meq K-citrate | 7.9 |
| MCI | 6.2 | 4 | 20 meq K-citrate | 10 |
| MCI | 6.0 | 4 | 70 meq K-acetate | - * |
| composition A | 6.0 | 4 | 70 meq K-gluconate | 26.5 |
| MCI | 6.2 | 20 | No chelator | 12.9 |
| MCI | 6.2 | 4 | No chelator | 15.9 |
| MCI | 5.8 | 4 | No chelator | 16.7 |

| | | | | |
|---|---|---|---|---|
| * No P reduction observed. | | | | |

While the experiment was also carried out using acetate, there was no effect observed. Citrate had no effect in P reduction, and no micellar structures were observed after treatment.

Best results are obtained with (disodium) maleate, and with gluconate. Treatment with gluconate resulted in the most profound P reduction in the micellar casein, and the micellar casein structure was retained, particularly stable in case of gluconate.

In Figure 1, there is plotted the zeta-potential (A), particle size (B) and viscosity (C) of a micellar casein isolate when subjected to pH variation and cooling variation. In those experiments no chelator was applied. Figures 1A and 1B both clearly show that below pH 6 the micellar structure is lost, even though this may not be directly observed in the viscosity profile in Figure 1C. pH values below 6.0 resulted in (partly) aggregated casein micelles. Moreover, it was suggested that internal casein micelle damaged, in the form of casein molecule solubilization (especially β-casein), which increased at pH 6.0 and progressed with a reducing pH.

The results for the heat stability tests with composition A are given in Table 4 below:

**Table 4: Heat stability of the samples with different calcium chelator**

| **Sample with calcium chelator** | **Heating time** | | |
|---|---|---|---|
| | **5 min** | **10 min** | **20 min** |
| 70 meq K-gluconate | liquid | liquid | liquid |
| 70 meq K-citrate | liquid | liquid | Aggregation to big flocs |
| 70 meq Disodium maleate | liquid | liquid | liquid |

### Example 2A: liquid heat-sterilized enteral nutritional composition

This is a recipe for a 2.4 kcal/ml product, with 0.58 kcal/ml protein (24en%), 0.83 kcal/ml fat (35en%) and 0.99 kcal/ml carbohydrates (41en%). Total dry matter is 37.3%, with 10.2% protein and 6.57% fat:

| **Ingredient** | **[g/100g final product]** |
|---|---|
| MCI with P reduction by gluconate | 73.2 |
| Soy lecithin Ip liquid | 0.18 |
| Sugar | 7.36 |
| Rapeseed Lear-sunflower - high oleic blend | 6.27 |
| Maltodextrin | 9.15 |
| Sodium caseinate | 2.93 |
| Choline chloride | 0.10 |
| Magnesium Hydroxide | 0.03 |
| Calcium chloride dihydrate | 0.04 |
| Tricalcium di citrate | 0.36 |
| Sodium chloride | 0.02 |
| Potassium hydroxide | 0.01 |
| Citric acid monohydrate | 0.06 |
| Tri potassium citrate monohydrate | 0.05 |
| Tri potassium citrate monohydrate 2nd | 0.05 |
| Potassium lactate | 0.16 |

In this recipe total P is 165 mg/100 ml or 68.7 mg P/100kcal.

### Example 2B: liquid heat-sterilized enteral nutritional composition

The recipe of example 2A has the following target mineral levels, all at least 20% less than the maximum values set by FSMP. These target numbers are provided together with the FSMP ranges, and the observed amounts in corresponding high-protein compositions high in micellar casein currently marketed.

**Table 5. Target values for minerals compared to those found in high-protein compositions high in micellar casein. Values presented in mg per 100 ml 2.4 kcal/ml product**

| | **FSMP REGULATION** | | **ACCEPTABLE (20%)** | | **TARGET** | **PRIOR ART** |
|---|---|---|---|---|---|---|
| | **Min.** | **Max.** | **Min** | **Max.** | | |
| Sodium (Na) | 72 | 420 | 86 | 336 | 86 | 40 |
| Potassium (K) | 192 | 708 | 230 | 566 | 230 | 105 |
| Chloride (CI) | 72 | 420 | 86 | 336 | 120 | 60 |
| Calcium (Ca) | 84 | 420 | 101 | 336 | 336 | *350* |
| Phosphorus (P) | 72 | 192 | 86 | 154 | 153 | *300 ** |
| Magnesium (Mg) | 18 | 60 | 22 | 48 | 30 | 54 |

| | | | | | | |
|---|---|---|---|---|---|---|
| * P in total amount (mg) per 100 ml product; 50 mg inorganic P from K2PO4, and 250 mg organic P from MCI | | | | | | |

### Example 3: choice of minerals

Following the recipe of example 2, multiple minerals were tried. Table 6 shows an overview of different minerals that had been tested in an attempt to replace monosodium phosphate in the process of reconstitution of casein micelles, seeking a way to reduce phosphorous while retaining the desired micellar casein structure necessary to prepare high-protein compositions.

**Table 6. choice of minerals**

| Mineral | Formula | Reduction in P, retain micellar structure | Comment |
|---|---|---|---|
| Trisodium citrate | Na₃C₆H₈O₇ | NO | No formation of micellar structures |
| Potassium gluconate | C₆H₁₁ₗKO₇ | YES | |
| Disodium maleate | C₄H₂Na₂O₄ | YES | |
| Sodium hydrogen maleate | C₄H₅NaO₅ | NO | pH dropped to 5.0 after adding sodium hydrogen maleate, and induced coagulation even when pH was (re-)adjusted to pH 6.7 |
| Sodium succinate | C₄H₁₆Na₂O₁₀ | NO | Non-homogenous sample and could not obtain intact MCI |
| Potassium sodium tartrate | C₄H₁₂KNaO₁₀ | NO | No formation of micellar structures |
| Sodium acetate | CH₃COONa | NO | No intact MCI obtained |
| Calcium carbonate | CaCO₃ | NO | No intact MCI obtained |

## Claims

1. A process for dephosphorylation of milk protein concentrate (MPC), milk protein isolate (MPI) or micellar casein isolate (MCI) comprising;
(i) acidification of a MPC, MPI or MCI not lower than pH 6.0, preferably between 6.0 and 6.7,
(ii) cooling the acidified MPC, MPI or MCI to the temperature between 0 °C and 15°C,
(iii) adding gluconate and/or maleate to the cooled MPC, MPI or MCI and,
washing the MPC, MPI or MCI, to remove phosphorus, wherein washing is carried out using microfiltration and/or diafiltration, thus dephosphorylating the MPC, MPI or MCI, preferably to an extent that the total phosphorous content of the MPC, MPI or MCI is reduced with at least 20%, preferably 20 - 40%, more preferably 30 - 40 % compared to the material provided to step (i),
wherein the maleate chelator is not hydrogen maleate salt.

2. The process according to claim 1, wherein the gluconate and/or maleate chelator is sodium gluconate, potassium gluconate, disodium maleate and/or dipotassium maleate, preferably sodium gluconate and/or potassium gluconate.

3. A dephosphorylated milk protein concentrate (MPC), milk protein isolate (MPI) or micellar casein isolate (MCI), the MPC, MPI or MCI comprising (added) gluconate and/or maleate, wherein the maleate is not hydrogen maleate salt, the MPC, MPI or MCI
- having a total phosphorous content of less than 15.0 mg P per g protein, more preferably below 14.0 mg even more preferably below 13.3 mg total phosphorous per gram protein,
- having a protein content of at least 60 wt%, and
obtainable by the process according to claim 1 or 2.

4. A liquid heat-sterilized enteral nutritional composition comprising a caloric content of 2.0 - 3.0 kcal/ml and a relative protein caloric content defined as 16 - 35 en% is provided by protein, wherein the caloric content and the relative protein caloric content are preferably selected such that there is 10 - 18 g/100 ml protein, more preferably 12 - 18 g/100 ml protein in the composition, wherein the protein comprises micellar casein (MC), whey protein (WP) and optionally caseinate (CAS), wherein there is at least 70 wt % MC and less than 15 wt % WP, based on total protein content, and wherein the composition has a total amount of phosphorous less than 192 mg/100 ml and/or 30 - 80 mg/100kcal, most preferably less than 192 mg/100 ml and 30 - 80 mg/100kcal,
and wherein the MC is provided
(i) by the dephosphorylated MPC, MPI or MCI according to claim 3, or
(ii) by the MPC, MPI or MCI obtainable by the process of claim 1.

5. The liquid composition according to claim 4, wherein the total amount of phosphorous is 30 - 72 mg/kcal, namely at least 10% below the foods for special medical purposes (FSMP) maximum, preferably 30 - 64 mg/kcal, namely at least 20% below the FSMP maximum.

6. The liquid composition according to any one of claims 4 or 5, wherein the protein provides 16 % to 32 % of the total energy content of the composition, more preferably 18 % to 30 en%, even more preferably 20 % to 28 en%, preferably in combination with a caloric content of 2.2 - 2.6 kcal/ml.

7. The liquid composition according to any one of claims 4- 6, wherein the amount of protein is between 12 and 18 g/100 ml.

8. The liquid composition according to any one of claims 4- 7, wherein the weight ratio of micellar casein to caseinate ranges from 90:10 to 75:25.

9. The liquid composition according to any one of claims 4- 8, wherein the amount of whey protein is less than 10 wt% based on total protein.

10. The liquid composition according to any one of claims 4- 9, further comprising at least 2 mineral levels, more preferably at least 3, even more preferably at least 4, most preferably all mineral levels for Na, K, Cl, Ca and Mg within the ranges (mg/100 kcal) according to the table below:
| | FSMP (min-max per 100 kcal) |
|---|---|
| Na (mg) | 30-175 |
| K (mg) | 80-295 |
| Cl (mg) | 30-175 |
| Ca (mg) | 35-175 |
| Mg (mg) | 7.5-25 |

## Patentansprüche

1. Verfahren zur Dephosphorylierung von Milchproteinkonzentrat (MPC), Milchproteinisolat (MPI) oder mizellarem Kaseinisolat (MCI), umfassend;
(i) Ansäuern eines MPC, MPI oder MCI nicht unter pH 6,0, vorzugsweise zwischen 6,0 und 6,7,
(ii) Kühlen des angesäuerten MPC, MPI oder MCI auf die Temperatur zwischen 0 °C und 15 °C,
(iii) Zugeben von Gluconat und/oder Maleat zu dem gekühlten MPC, MPI oder MCI und,
Waschen des MPC, MPI oder MCI, um Phosphor zu entfernen, wobei das Waschen mittels Mikrofiltration und/oder Diafiltration durchgeführt wird, wodurch das MPC, MPI oder MCI dephosphoryliert wird, vorzugsweise in einem Ausmaß, dass der Gesamtphosphorgehalt des MPC, MPI oder MCI um mindestens 20 %, vorzugsweise 20 - 40 %, bevorzugter 30 - 40 % verglichen mit dem Material, das Schritt (i) zugeführt wird, reduziert wird,
wobei der Maleat-Chelatbildner nicht Hydrogenmaleat-Salz ist.

2. Verfahren nach Anspruch 1, wobei der Gluconat- und/oder Maleat-Chelatbildner Natriumgluconat, Kaliumgluconat, Dinatriummaleat und/oder Dikaliummaleat ist, vorzugsweise Natriumgluconat und/oder Kaliumgluconat.

3. Dephosphoryliertes Milchproteinkonzentrat (MPC), Milchproteinisolat (MPI) oder mizellares Kaseinisolat (MCI), wobei das MPC, MPI oder MCI (zugegebenes) Gluconat und/oder Maleat umfasst, wobei das Maleat nicht Hydrogenmaleat-Salz ist, wobei das MPC, MPI oder MCI
- einen Gesamtphosphorgehalt von weniger als 15,0 mg P pro g Protein aufweist, bevorzugter unter 14,0 mg, noch bevorzugter unter 13,3 mg Gesamtphosphor pro Gramm Protein,
- einen Proteingehalt von mindestens 60 Gew.-% aufweist, und
erhältlich ist durch das Verfahren nach Anspruch 1 oder 2.

4. Flüssige hitzesterilisierte enterale Ernährungszusammensetzung, umfassend einen Energiegehalt von 2,0 - 3,0 kcal/ml und einen relativen Proteinenergiegehalt, definiert als 16 - 35 en%, der durch Protein bereitgestellt wird, wobei der Energiegehalt und der relative Proteinenergiegehalt vorzugsweise so ausgewählt werden, dass 10 - 18 g/100 ml Protein, bevorzugter 12 - 18 g/100 ml Protein in der Zusammensetzung vorhanden sind, wobei das Protein mizellares Kasein (MC), Molkenprotein (WP) und gegebenenfalls Kaseinat (CAS) umfasst, wobei mindestens 70 Gew.-% MC und weniger als 15 Gew.-% WP vorhanden sind, bezogen auf den Gesamtproteingehalt, und wobei die Zusammensetzung eine Gesamtmenge an Phosphor von weniger als 192 mg/100 ml und/oder 30 - 80 mg/100 kcal aufweist, am bevorzugtesten weniger als 192 mg/100 ml und 30 - 80 mg/100 kcal,
und wobei das MC bereitgestellt wird
(i) durch das dephosphorylierte MPC, MPI oder MCI nach Anspruch 3, oder
(ii) durch das MPC, MPI oder MCI, erhältlich durch das Verfahren nach Anspruch 1.

5. Flüssige Zusammensetzung nach Anspruch 4, wobei die Gesamtmenge an Phosphor 30 - 72 mg/kcal beträgt, nämlich mindestens 10 % unter dem Höchstwert für Lebensmittel für besondere medizinische Zwecke (FSMP), vorzugsweise 30 - 64 mg/kcal, nämlich mindestens 20 % unter dem FSMP-Höchstwert.

6. Flüssige Zusammensetzung nach einem der Ansprüche 4 oder 5, wobei das Protein 16 % bis 32 % des Gesamtenergiegehalts der Zusammensetzung bereitstellt, bevorzugter 18 % bis 30 en%, noch bevorzugter 20 % bis 28 en%, vorzugsweise in Kombination mit einem Energiegehalt von 2,2 - 2,6 kcal/ml.

7. Flüssige Zusammensetzung nach einem der Ansprüche 4 bis 6, wobei die Menge an Protein zwischen 12 und 18 g/100 ml beträgt.

8. Flüssige Zusammensetzung nach einem der Ansprüche 4 bis 7, wobei das Gewichtsverhältnis von mizellarem Kasein zu Kaseinat von 90:10 bis 75:25 reicht.

9. Flüssige Zusammensetzung nach einem der Ansprüche 4 bis 8, wobei die Menge an Molkenprotein weniger als 10 Gew.-% bezogen auf Gesamtprotein beträgt.

10. Flüssige Zusammensetzung nach einem der Ansprüche 4 bis 9, ferner umfassend mindestens 2 Mineralstoffgehalte, bevorzugter mindestens 3, noch bevorzugter mindestens 4, am bevorzugtesten alle Mineralstoffgehalte für Na, K, Cl, Ca und Mg innerhalb der Bereiche (mg/100 kcal) gemäß der nachstehenden Tabelle:
| | FSMP (min.-max. pro 100 kcal) |
|---|---|
| Na (mg) | 30 - 175 |
| K (mg) | 80 - 295 |
| Cl (mg) | 30 - 175 |
| Ca (mg) | 35 - 175 |
| Mg (mg) | 7,5 - 25 |

## Revendications

1. Procédé de déphosphorylation de concentré de protéines de lait (MPC), d'isolat de protéines de lait (MPI) ou d'isolat de caséine micellaire (MCI) comprenant ;
(i) l'acidification d'un MPC, MPI ou MCI non inférieur à pH 6,0, de préférence entre 6,0 et 6,7,
(ii) le refroidissement du MPC, MPI ou MCI acidifié à la température comprise entre 0 °C et 15 °C,
(iii) l'ajout de gluconate et/ou de maléate au MPC, MPI ou MCI refroidi et,
le lavage du MPC, MPI ou MCI, pour éliminer le phosphore, dans lequel le lavage est effectué par microfiltration et/ou diafiltration, déphosphorylant ainsi le MPC, MPI ou MCI, de préférence dans une mesure telle que la teneur totale en phosphore du MPC, MPI ou MCI est réduite d'au moins 20 %, de préférence 20 - 40 %, plus préférablement 30 - 40 % par rapport au matériau fourni à l'étape (i),
dans lequel l'agent chélatant maléate n'est pas un sel d'hydrogénomaléate.

2. Procédé selon la revendication 1, dans lequel l'agent chélatant gluconate et/ou maléate est du gluconate de sodium, du gluconate de potassium, du maléate disodique et/ou du maléate dipotassique, de préférence du gluconate de sodium et/ou du gluconate de potassium.

3. Concentré de protéines de lait (MPC), isolat de protéines de lait (MPI) ou isolat de caséine micellaire (MCI) déphosphorylé, le MPC, MPI ou MCI comprenant du gluconate et/ou du maléate (ajoutés), dans lequel le maléate n'est pas un sel d'hydrogénomaléate, le MPC, MPI ou MCI
- ayant une teneur totale en phosphore inférieure à 15,0 mg P par g de protéine, plus préférablement inférieure à 14,0 mg encore plus préférablement inférieure à 13,3 mg de phosphore total par gramme de protéine,
- ayant une teneur en protéines d'au moins 60 % en poids, et
pouvant être obtenu par le procédé selon la revendication 1 ou 2.

4. Composition nutritionnelle entérale liquide stérilisée à la chaleur comprenant une teneur calorique de 2,0 - 3,0 kcal/ml et une teneur calorique protéique relative définie comme 16 - 35 en% est fournie par la protéine, dans laquelle la teneur calorique et la teneur calorique protéique relative sont de préférence sélectionnées de telle sorte qu'il y a 10 - 18 g/100 ml de protéine, plus préférablement 12 - 18 g/100 ml de protéine dans la composition, dans laquelle la protéine comprend de la caséine micellaire (MC), de la protéine de lactosérum (WP) et optionnellement du caséinate (CAS), dans laquelle il y a au moins 70 % en poids de MC et moins de 15 % en poids de WP, sur la base de la teneur totale en protéines, et dans laquelle la composition a une quantité totale de phosphore inférieure à 192 mg/100 ml et/ou 30 - 80 mg/100 kcal, le plus préférablement inférieure à 192 mg/100 ml et 30 - 80 mg/100 kcal,
et dans laquelle la MC est fournie
(i) par le MPC, MPI ou MCI déphosphorylé selon la revendication 3, ou
(ii) par le MPC, MPI ou MCI pouvant être obtenu par le procédé de la revendication 1.

5. Composition liquide selon la revendication 4, dans laquelle la quantité totale de phosphore est de 30 - 72 mg/kcal, à savoir au moins 10 % en dessous du maximum des aliments destinés à des fins médicales spéciales (FSMP), de préférence 30 - 64 mg/kcal, à savoir au moins 20 % en dessous du maximum des FSMP.

6. Composition liquide selon l'une quelconque des revendications 4 ou 5, dans laquelle la protéine fournit 16 % à 32 % de la teneur en énergie totale de la composition, plus préférablement 18 % à 30 en%, encore plus préférablement 20 % à 28 en%, de préférence en combinaison avec une teneur calorique de 2,2 - 2,6 kcal/ml.

7. Composition liquide selon l'une quelconque des revendications 4 à 6, dans laquelle la quantité de protéine est comprise entre 12 et 18 g/100 ml.

8. Composition liquide selon l'une quelconque des revendications 4 à 7, dans laquelle le rapport en poids de la caséine micellaire au caséinate va de 90:10 à 75:25.

9. Composition liquide selon l'une quelconque des revendications 4 à 8, dans laquelle la quantité de protéine de lactosérum est inférieure à 10 % en poids sur la base de la protéine totale.

10. Composition liquide selon l'une quelconque des revendications 4 à 9, comprenant en outre au moins 2 niveaux minéraux, plus préférablement au moins 3, encore plus préférablement au moins 4, le plus préférablement tous les niveaux minéraux pour Na, K, Cl, Ca et Mg dans les plages (mg/100 kcal) selon le tableau ci-dessous :
| | FSMP (min-max pour 100 kcal) |
|---|---|
| Na (mg) | 30 - 175 |
| K (mg) | 80 - 295 |
| Cl (mg) | 30 - 175 |
| Ca (mg) | 35 - 175 |
| Mg (mg) | 7,5 - 25 |
